# EUROPEAN PATENT APPLICATION

(11) **EP 1 885 137 A1**
(43) Date of publication of application: **06.02.2008**
(21) Application number: 06742006.7
(22) Date of filing: 26.05.2006
(51) Int. Cl.: H04Q 1/20

(54) **A SUBSCRIBER BOARD**

(30) Priority: 27.05.2005 CN 200520058982 U; 27.05.2005 CN 200520107491 U
(71) Applicant: Huawei Technologies Co., Ltd., Longgang District Shenzhen Guangdong 518129 (CN)
(72) Inventor: HUANG, Shikui, Huawei Administration Building, Shenzhen, Guangdong 518219 (CN); LI, Dong, Huawei Administration Building, Shenzhen, Guangdong 518219 (CN)
(74) Representative: Collin, Jérôme
(86) International application number: PCT/CN2006/001118
(87) International publication number: WO 2006/125399

(57) **Abstract**

A subscriber board uses Microsoft Electro Mechanical System (MEMS) relay, and thus avoids the disadvantages of wide square occupied in broadband subscriber board by mechanical relay, liquid relay and the like, low PCB integration density of broadband subscriber board, high power consumption of mechanical relay and relative poor high-frequency performance of liquid relay and the like. Therefore the technical solution of the present invention can increase PCB integration density of subscriber board, improve electrical characteristic, and reduce the power consumption of subscriber board. The present invention also discloses broadband subscriber board and narrowband subscriber board.

## Description

### Field of the Invention

The present invention relates to a network communication device and in particular to a subscriber card.

### Background of the Invention

A subscriber card is one providing an interface for a user in a communication system, and includes a broadband subscriber card and a narrowband subscriber card.

The broadband subscriber card is a subscriber card providing a broadband interface for a user in a communication system.

The broadband subscriber card includes a subscriber card of Asymmetric Digital Subscriber Line or Asymmetrical Digital Subscriber Loop (ADSL), a subscriber card of Very High Speed DSL (VDSL), etc.

The broadband subscriber card typically provides functions of an internal line test, an external line test, and an N+1 backup of a subscriber port.

The functions of the internal line test and the external line test refer to testing a certain subscriber line segment with a test module built in the broadband subscriber card or a test instrument external to the broadband subscriber card to obtain line parameter data.

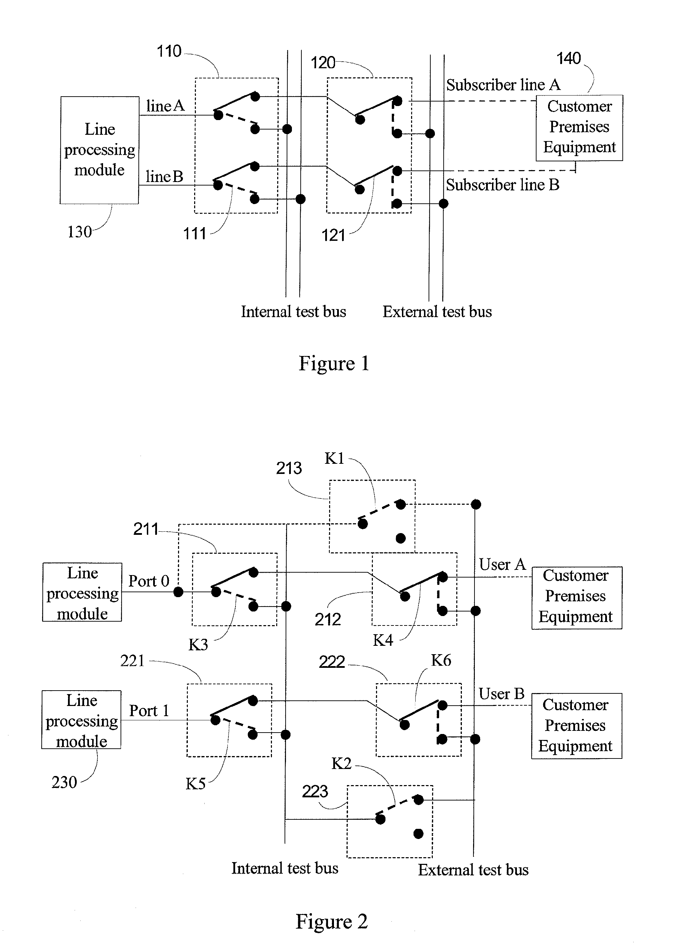

During the internal line test and the external line test, a switching by a relay is utilized to select a specific subscriber line segment and to disconnect certain part of the subscriber line for testing, as illustrated in Figure 1.

Referring to Figure 1, an internal line test switching module 110 and an external line test switching module 120 are provided between a Customer Premises Equipment (CPE) 140 and a line processing module 130. During a normal operation of the broadband subscriber card, relays 111 and 121 in the switching modules 110 and 120 are set in a connection status as indicated with solid lines, and when an internal line test or an external line test is to be performed, in other words, lines A and B are switched, the relay 111 or 121 in the switching module 110 or 120 is set in a connection status as indicated with dotted lines.

The broadband subscriber card typically also provides the function of the N+1 backup of a subscriber port. For instance, a broadband subscriber card is provided with M subscriber ports, where M-1 subscriber ports are for a normal use, and one subscriber port is a backup port. When a cabinet failure occurs at one of the M-1 subscriber ports, this port is switched to the backup port to ensure a normal use of a user service.

During the switching of the port, the switching by a relay is also adopted to enable a port backup, as illustrated in Figure 2.

With reference to Figure 2, the function of the N+1 backup of a subscriber port makes use of internal line test switching modules 211 and 221, and external line test switching modules 212 and 222, in addiction, backup switching modules 213 and 223 including relays K1 and K2 respectively are provided. Assume that port 0 is a backup port, and port 1 is a subscriber port for a normal use. When a line processing module 230 of the port 1 fails, the port backup function is enabled through switching relays K3, K2 and K6, or relays K1 and K6.

At present, in the implementation of the functions of the internal line test, the external line test, and the N+1 backup of a subscriber port in a broadband subscriber card, a relay in a switching module primarily adopts a mechanical relay. The mechanical relay runs depending upon an electromagnetic principle, and not only occupies a large area of a Printed Circuit Board (PCB) in a broadband subscriber card due to its large volume, resulting in a low PCB integration density of the broadband subscriber card, but also consumes relatively high power.

Moreover, a solid state relay is currently used to replace the mechanical relay in the broadband subscriber card. The solid state relay is one type of relays developed in recent years. However, the solid state relay is still of a relatively large volume regardless of being superior to the mechanical relay to some extent in terms of its volume, and thus its volume is expected to be reduced further. In addition, the solid state relay has poor performance at high frequencies.

The narrowband subscriber card refers to a subscriber card of Plain Old Telephone Service (POTS) providing a normal telephone function. Generally, in addition to the normal telephone function, various application functions are provided by the narrowband subscriber card, such as the internal line and external line test functions, a ring stream function, and a subscriber line polarity inversion function, which are common on the narrowband subscriber card currently. Enabling of the above application functions on the narrowband subscriber card is accomplished through switching a relay. In other words, through switching of a control component, i.e. a relay switch, the narrowband subscriber card may achieve switching of statuses of the normal operation, the internal line test function, the external line test function, the ring stream function (telephone ring), and the subscriber line polarity inversion function.

Similarly to the broadband subscriber card, most narrowband subscriber cards enable the above functions with the use of a mechanical relay in the prior art. For instance, a mechanical relay of the type of single-pole double-throw, double-pole double-throw or the like may be used for switching the above application functions.

Since a mechanical relay is characterized by a large volume, high power consumption, etc., especially the characteristic of a large volume, a further development of the density of the narrowband subscriber card has been restricted.

In the prior art, a further improvement is the use of a solid state relay on the narrowband subscriber card to enable switching of the above application functions. The solid state relay still occupies a relatively large area of the Printed Circuit Board, although it has a reduced volume as compared with the mechanical relay

### Summary of the Invention

The present invention provides a subscriber card which may improve its PCB integration density and electric performance and lower its power consumption.

According to an embodiment of the invention, there is provided a broadband subscriber card in which a relay is provided, wherein the relay is a Micro Electro Mechanical System relay

The broadband subscriber card includes an ADSL subscriber card, and a VDSL subscriber card.

The Micro Electro Mechanical System relay is an electrostatic Micro Electro Mechanical System relay.

The Micro Electro Mechanical System relay is a thermoelectric Micro Electro Mechanical System relay

The Micro Electro Mechanical System relay is an electromagnetic Micro Electro Mechanical System relay.

The Micro Electro Mechanical System relay is located in an internal line test switching module.

The Micro Electro Mechanical System relay is located in an external line test switching module.

The Micro Electro Mechanical System relay is located in a port backup switching module.

According to another embodiment of the invention, there is provided a broadband subscriber card, including an internal line test switching module adapted to control a connection between a test module built in the broadband subscriber card and a line to be tested, wherein a Micro Electro Mechanical System relay is provided in the internal line test switching module as a switching switch.

According to another embodiment of the invention, there is provided a broadband subscriber card, including an external line test switching module adapted to control a connection between a test instrument external to the broadband subscriber card and a subscriber line to be tested, wherein a Micro Electro Mechanical System relay is provided in the external line test switching module as a switching switch.

According to another embodiment of the invention, there is provided a broadband subscriber card, including a backup switching module adapted to control a connection between a backup port of the broadband subscriber card and a Custom Premises Equipment, wherein a Micro Electro Mechanical System relay is provided in the backup switching module as a switching switch.

According to another embodiment of the invention, there is provided a narrowband subscriber card, including various application function devices of the narrowband subscriber card, wherein the narrowband subscriber card further includes:
Micro Electro Mechanical System relay element adapted to switch to connect or disconnect the respective application function devices of the narrowband subscriber card, and connected respectively with the respective application function devices of the narrowband subscriber card in a switch approach.

The Micro Electro Mechanical System relay element is an electrostatic Micro Electro Mechanical System relay, a thermoelectric Micro Electro Mechanical System relay, and/or an electromagnetic Micro Electro Mechanical System relay.

The application function devices of the narrowband subscriber card include an internal line test function device, an external line test function device, a ring stream function device, and a subscriber line polarity inversion function device.

According to another embodiment of the invention, there is provided a subscriber card, including a function switching module adapted to selectively connect or disconnect an application function device of the subscriber card, wherein a Micro Electro Mechanical System relay element is provided in the function switching module of the subscriber card as a switching switch.

According to the invention, the Micro Electro Mechanical System relay is used in the subscriber card, and thus it is possible to avoid disadvantages such as a low PCB integration density of the broadband subscriber card due to occupying a large area in the broadband subscriber card by the mechanical and solid state relays, the high power consumption by the mechanical relay, and the poor performance of the solid state relay at high frequencies, so that the purposes of increasing the PCB integration density of the subscriber card, of enhancing the electric performance of the subscriber card, and of lowering the power consumption of the subscriber card may be achieved.

### Brief Descriptions of the Drawings

Figure 1 is a schematic diagram of performing an internal line test and an external line test with the use of a relay in the prior art;
Figure 2 is a schematic diagram of performing an N+1 backup of a subscriber port with the use of a relay in the prior art;
Figure 3 is a schematic diagram of performing an internal line test, an external line test, and an N+1 backup of a subscriber port in a broadband subscriber broad according to an embodiment of the invention;
Figure 4 is a schematic diagram of a narrowband subscriber card according to an embodiment of the invention;
Figure 5 is a schematic diagram of enabling an external line test function on a narrowband subscriber card according to an embodiment of the invention;
Figure 6 is a schematic diagram of enabling an internal line test function on a narrowband subscriber card according to an embodiment of the invention;
Figure 7 is a schematic diagram of enabling a ring stream function on a narrowband subscriber card according to an embodiment of the invention;
Figure 8 is a schematic diagram of enabling a subscriber line polarity inversion function on a narrowband subscriber card according to an embodiment of the invention.

### Detailed Descriptions of the Embodiments

An essential ideal of the invention lies in that a relay provided in a subscriber card is a Micro Electro Mechanical System relay, where the subscriber card includes a broadband subscriber card and a narrowband subscriber card.

Embodiments of the solutions provided according to the invention will be further described hereinafter based upon the essential ideal thereof.

Micro Electro Mechanical System (MEMS) technologies relate to an edge and cross science, and one of its specific applications is the use of the MEMS technologies to enable a switch function and further a relay function.

A relay using the MEMS technologies may be referred to as an MEMS relay, and the MEMS relay has features of a small volume, low power consumption, a superior electric performance etc., as compared with a conventional relay, such as a mechanical relay, and a recent relay such as a solid state relay.

The use of an MEMS relay in a broadband subscriber card eliminates disadvantages such as occupying a large area on a subscriber card and consuming high power by a mechanical relay, a solid state relay, etc., and thus offers a good approach for increasing the PCB integration density of a broadband subscriber broad and lowering power consumption of the broadband subscriber broad. Further, due to the superior electric performance of the MEMS relay, it is possible to reduce effectively distortion of XDSL signals in transmission, to reduce a crosstalk between two subscriber lines, and to increase a transmission distance of the signals, thereby improving electric performance of the broadband subscriber broad.

Currently, the MEMS relay primarily includes three types of electrostatic MEME relay, thermoelectric MEMS relay, and electromagnetic MEMS relay.

The electrostatic MEME relay is controlled to be closed under a natural adsorption effect of charges.

The thermoelectric MEMS relay is controlled to be closed through a deformation of a material of the switch after absorbing a heat generated from a current.

The electromagnetic MEMS relay is in analogy to a conventional relay and primarily generates a magnetic signal from an electric signal, and the MEMS relay is controlled to be closed or open under an adsorption effect between different magnetic poles.

An MEMS relay in a broadband subscriber card of the invention will not be limited to the above three types of MEMS relays. The inventive broadband subscriber card can be, but will not be limited to, an ADSL subscriber card, a VDSL subscriber card, etc.

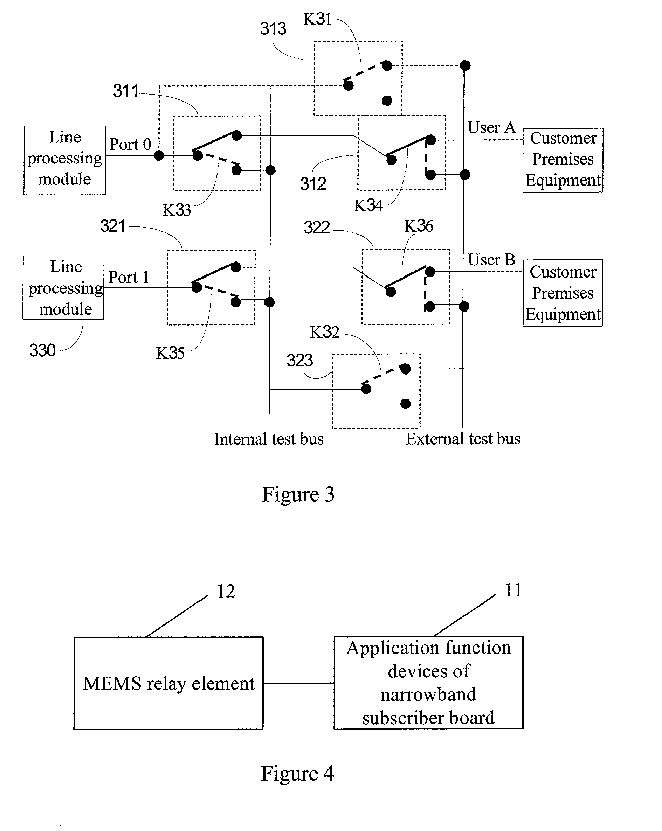

Figure 3 is a schematic diagram illustrating the use of an MEMS relay, instead of an original mechanical relay or solid state relay, to enable functions of internal line test, external line test, and N+1 backup function of a subscriber port in the broadband subscriber card.

A connection in Figure 3 is in analogy to that in Figure 2, but relays in Figure 3 are MEMS relays.

A procedure of performing the functions of internal line test, and external line test will be described hereinafter with reference to Figure 3. During a normal operation of the broadband subscriber card, MEMS relays K33, K35, K34, and K36 in test switching modules 311, 321, 312, and 322 are set in a connection status as indicated with solid lines, and when an internal line test or an external line test is to be performed, MEMS relays K3 and K5 or K4 and K6 in the test switching modules 311 and 321 or 312 and 322 are set in a connection status as indicated with dotted lines.

A procedure of performing the function of N+1 backup of a subscriber port will be described hereinafter with reference to Figure 3. Assume that port 0 is a backup port, and port 1 is a subscriber port for a normal use. When a line processing module 330 of the port 1 fails, the port backup function is performed through switching an MEMS relay K32 in a backup switching module 323, and the MEMS relays K32 and K36 in the test switching modules 311 and 322, or through switching an MEMS relay K31 in a backup switching module 313, and the MEMS relay K36 in the test switching module 322.

The connection in Figure 3 is merely one specific connection for implementing the functions of internal line test, external line test, and N+1 backup function of a subscriber port in the broadband subscriber card. In a practical application, the functions of internal line test, external line test, and N+1 backup function of a subscriber port also may be implemented in the broadband subscriber card through another connection, and a connection in the broadband subscriber card provided with the MEMS relays according to the invention will not be limited to the connection in Figure 3. Further, an application of the MEMS relays provided in the broadband subscriber card according to the invention will not be limited to the applications in the functions of internal line test, external line test, and N+1 backup function of a subscriber port.

With reference to Figure 4, a narrowband subscriber card according to an embodiment of the invention includes various application function devices 11 of the narrowband subscriber card. A commonly used application function device includes an internal line test function device, an external line test function device, a ring stream function device, and a subscriber line polarity inversion function device, which are used respectively for the internal line test function, the external line test function, the ring stream function, and the subscriber line polarity inversion function. In a specific application, other application function devices may also be included, and will not be described here in detail.

Further, in the narrowband subscriber card of the invention, an MEMS relay element 12 is used to control the enabling of various application functions of the narrowband subscriber card, such as the internal line test function, the external line test function, the ring stream function, and the subscriber line polarity inversion function.

The Micro Electro Mechanical System relay element 12 is connected respectively with the respective application function devices 11 of the narrowband subscriber card in a switch approach, and is adapted to selectively connect or disconnect the respective application function devices 11 of the narrowband subscriber card to enable the respective application functions of the narrowband subscriber card.

It will be appreciated that the various application functions of the narrowband subscriber card are mainly enabled through providing the Micro Electro Mechanical System relay element 12 connected respectively with the respective application function devices 11 of the narrowband subscriber card in a switch approach. Specifically, for the various application functions of the narrowband subscriber card, the Micro Electro Mechanical System relay element is switched in a switch approach under its control to connect with the respective application function devices of the narrowband subscriber card, and further the respective application function devices of the narrowband subscriber card implements the corresponding application function of the narrowband subscriber card.

Descriptions of implementing specific application functions of a narrowband subscriber card will be given hereinafter.

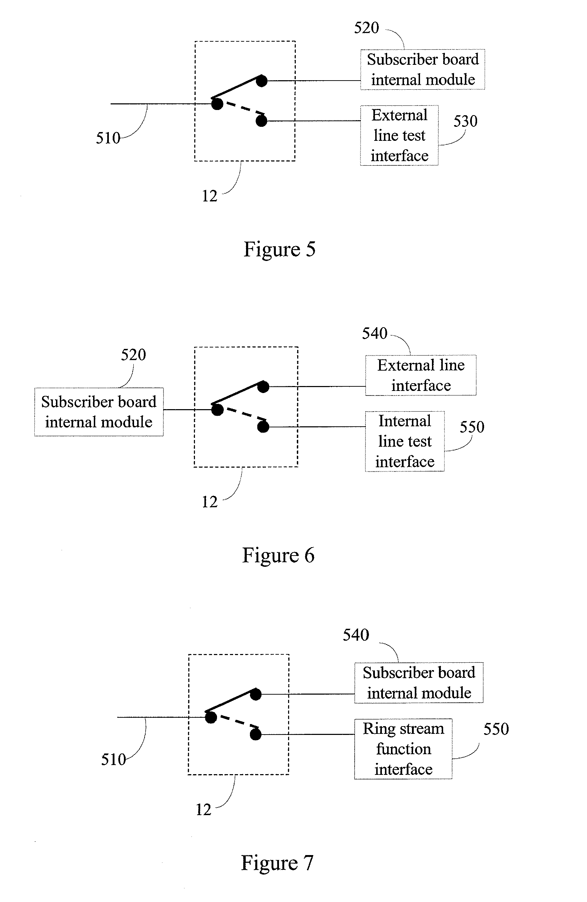

With reference to Figure 5, for an external line test function, in an embodiment of the invention, an original mechanical relay or solid state relay is replaced with the MEMS relay element 12. When an external line test is to be performed, the MEMS relay element 12 disconnects a connection between a subscriber line 510 and a subscriber card internal module 520, and connects the subscriber line 510 and an external line test interface 530. Further, an external line test device (not shown) connected with the external line test interface 530 performs the external line test.

With reference to Figure 6, for an internal line test function, in an embodiment of the invention, an original mechanical relay or solid state relay is replaced with the MEMS relay element 12. When an internal line test is to be performed, the MEMS relay element 12 disconnects a connection between a subscriber card internal module 520 and an external line interface 540, and connects the subscriber card internal module 520 and an internal line test interface 550. Further, an internal line test device (not shown) connected with the internal line test interface 550 performs the internal line test.

With reference to Figure 7, for a ring stream function, in an embodiment of the invention, an original mechanical relay or solid state relay is replaced with the MEMS relay element 12. When the ring stream function is to be enabled, the MEMS relay element 12 disconnects a connection between a subscriber line 510 and a subscriber card internal module 520, and connects the subscriber line 510 and a ring stream function interface 560. Further, a ring stream function device (not shown) connected with the ring stream function interface 560 enables the corresponding ring stream function.

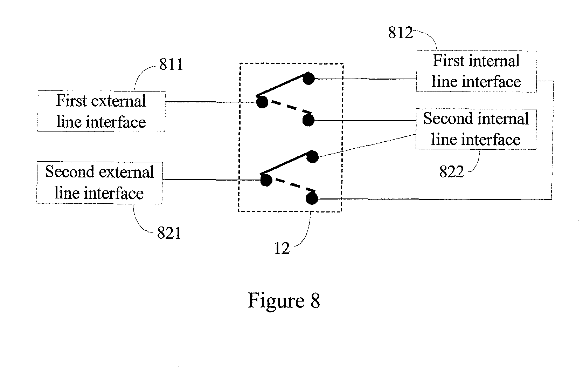

With reference to Figure 8, for a subscriber line polarity inversion function, in an embodiment of the invention, an original mechanical relay or solid state relay is replaced with the MEMS relay element 12. When the subscriber line polarity inversion function is to be enabled, the MEMS relay element 12 disconnects a connection between an external line interface 811 and an internal line interface 812, and switches the external line interface 811 to an internal line interface 822, also disconnects a connection between an external line interface 821 and the internal line interface 822, and switches the external line interface 821 to the internal line interface 812, thereby enabling the subscriber line polarity inversion function.

Although the invention has been described with reference to the embodiments, it is apparent to those skilled in the art that there are various modifications and variations possibly made to the invention without departing the spirit thereof, and all the modifications and variations are covered by the claims in this application document of the invention.

## Claims

1. A broadband subscriber card provided with a relay, **characterized in that**, the relay is a Micro Electro Mechanical System relay.

2. The broadband subscriber card according to claim 1, **characterized in that**, the broadband subscriber card comprises a subscriber card of Asymmetric Digital Subscriber Line, a subscriber card of Asymmetrical Digital Subscriber Loop, or a subscriber card of Very High Speed Digital Subscriber Line.

3. The broadband subscriber card according to claim 1, **characterized in that**, the Micro Electro Mechanical System relay is an electrostatic Micro Electro Mechanical System relay, a thermoelectric Micro Electro Mechanical System relay, and/or an electromagnetic Micro Electro Mechanical System relay

4. The broadband subscriber card according to any one of claims 1 to 3, **characterized in that**, the Micro Electro Mechanical System relay is located in an internal line test switching module of the broadband subscriber card, an external line test switching module of the broadband subscriber card, and/or a port backup switching module of the broadband subscriber card.

5. A broadband subscriber card, comprising an internal line test switching module adapted to control a connection between a test module built in the broadband subscriber card and a line to be tested, **characterized in that**, a Micro Electro Mechanical System relay is provided in the internal line test switching module as a switching switch.

6. A broadband subscriber card, comprising an external line test switching module adapted to control a connection between a test instrument external to the broadband subscriber card and a subscriber line to be tested, **characterized in that**, a Micro Electro Mechanical System relay is provided in the external line test switching module as a switching switch.

7. A broadband subscriber card, comprising a backup switching module adapted to control a connection between a backup port of the broadband subscriber card and a Custom Premises Equipment, **characterized in that**, a Micro Electro Mechanical System relay is provided in the backup switching module as a switching switch.

8. A narrowband subscriber card, comprising various application function devices of the narrowband subscriber card, **characterized in that**, the narrowband subscriber card further comprises:
a Micro Electro Mechanical System relay element adapted to switch to connect or disconnect the respective application function devices of the narrowband subscriber card, and connected respectively with the respective application function devices of the narrowband subscriber card in a switch approach.

9. The narrowband subscriber card according to claim 12, **characterized in that**, the Micro Electro Mechanical System relay element is an electrostatic Micro Electro Mechanical System relay, a thermoelectric Micro Electro Mechanical System relay, and/or an electromagnetic Micro Electro Mechanical System relay.

10. The narrowband subscriber card according to claim 12 or 13, **characterized in that**, the application function devices of the narrowband subscriber card comprises an internal line test function device, an external line test function device, a ring stream function device, and a subscriber line polarity inversion function device.

11. A subscriber card, comprising a function switching module adapted to selectively connect or disconnect an application function device of the subscriber card, **characterized in that**, a Micro Electro Mechanical System relay element is provided in the function switching module of the subscriber card as a switching switch.
